(19) Europäisches Patentamt
European Patent Office
Office européen des brevets

(11) **EP 2 919 136 A1**

(12) **EUROPEAN PATENT APPLICATION**

(43) Date of publication:
16.09.2015 Bulletin 2015/38

(51) Int Cl.:
***G06F 17/30*** *(2006.01)*

(21) Application number: 15154051.5

(22) Date of filing: 06.02.2015

| | |
|---|---|
| (84) Designated Contracting States:<br>AL AT BE BG CH CY CZ DE DK EE ES FI FR GB GR HR HU IE IS IT LI LT LU LV MC MK MT NL NO PL PT RO RS SE SI SK SM TR<br>Designated Extension States:<br>BA ME | • **Zhang, Bo**<br>**100085 Beijing (CN)**<br>• **Zhang, Tao**<br>**100085 Beijing (CN)**<br>• **Wang, Lin**<br>**100085 Beijing (CN)** |
| (30) Priority: 14.03.2014 CN 201410096608 | (74) Representative: **Delumeau, François Guy et al**<br>**Cabinet Beau de Loménie**<br>**158, rue de l'Université**<br>**75340 Paris Cedex 07 (FR)** |
| (71) Applicant: **Xiaomi Inc.**<br>**Beijing 100085 (CN)** | |
| (72) Inventors:<br>• **Chen, Zhijun**<br>**100085 Beijing (CN)** | |

(54) **Method and device for clustering**

(57) The present disclosure relates to a method and a device for clustering. The method for clustering includes: obtaining a weighted distance between classes according to a weight coefficient corresponding to an inter-object distance, the weight coefficient is determined according to a similarity between two objects, i.e. the inter-object distance is weighted; and then combining the classes whose weighted distances meet a combining condition, which is terminated until the number of the classes after combining is the same as the number of the classes before combining, and obtaining a clustering result.

Fig. 1

EP 2 919 136 A1

**Description**

**TECHNICAL FIELD**

The present disclosure generally relates to the field of computer technology, and more particularly, to a method and a device for clustering.

**BACKGROUND**

Clustering is a process of dividing a set of physical or abstract objects into a plurality of classes composed of similar objects, i.e. a process of classifying the objects into different classes or clusters, such that the objects in the same class have a great similarity, and the objects from different classes have a great dissimilarity. A hierarchical method for clustering hierarchically decomposes the set of given objects, until a certain termination condition is satisfied. An agglomerative hierarchical method for clustering is a bottom-up strategy, it considers each object as one class at first, and then combines these classes into a bigger and bigger class, until a certain termination condition is satisfied. Most of the hierarchical methods for clustering belong to this kind, only that the definitions of similarities between classes are different.

For example, when the method for clustering is used for classifying pictures, the pictures that belong to the same person are classified into one class, a related method for clustering only uses distances between classes to measure a similarity between two faces. Distances between the respective objects make substantively the same contribution to the measurement of the similarity, such that the accuracy of a clustering result of this kind of method for clustering is rather low.

**SUMMARY**

In order to solve the above technical problems existing in the related art, the present disclosure provides a method and a device for clustering. The technical solutions are at follows.

According to a first aspect, the invention relates to a method for clustering, the method comprises:

obtaining a weighted distance between two classes according to a weight coefficient corresponding to an inter-object distance with respect to all classes to be combined, the weight coefficient being determined according to a similarity between two objects corresponding to the inter-object distance; determining whether there are classes that can be combined according to the weighted distance between the two classes and a preset distance threshold; when the classes that can be combined exist, respectively combining all of the classes that can be combined, and returning to perform the step of obtaining the weighted distance between the two classes according to the weight coefficient corresponding to the inter-object distance with respect to all classes to be combined until the number of the classes after combining is the same as the number of the classes before combining, and obtaining a clustering result.

In a particular embodiment, , the method further comprises:

obtaining a corresponding relationship between the inter-object distance and a probability whether the two objects are the same object according to sample object statistics; and determining a mapping relationship between the inter-object distance and the weight coefficient according to the corresponding relationship, the weight coefficient being determined according to the probability.

In a particular embodiment, the step of determining the mapping relationship between the inter-object distance and the weight coefficient according to the corresponding relationship comprises:

querying the corresponding relationship to obtain the probability whether the two objects corresponding to the inter-object distance are the same object; and determining that the probability is the weight coefficient corresponding to the inter-object distance.

In a particular embodiment,, the weighted distance is a weighted distance between a first class and a second class; the step of obtaining the weighted distance between the two classes according to the weight coefficient corresponding to the inter-object distance with respect to all classes to be combined comprises:

obtaining a first unidirectional weighted distance from the first class to the second class according to distances between all objects of the first class and all objects of the second class and corresponding weight coefficients; acquiring a second unidirectional weighted distance form the second class to the first class; and obtaining a weighted distance between the first class and the second class according to the first unidirectional weighted distance and the second unidirectional weighted distance.

In a particular embodiment,, the step of obtaining the first unidirectional weighted distance from the first class to the second class according to the distances between all objects of the first class and all objects of the second class and the corresponding weight coefficients comprises:

acquiring a greatest similarity distance between any object within the first class and all objects of the second class, and a first weight coefficient corresponding to the greatest similarity distance;

obtaining a minimum weighted distance between the object in the first object and all objects of the second class, according to a product of the greatest similarity distance and the corresponding first weight coefficient;

acquiring an average weighted distance of distances between the object in the first class and other objects except the object corresponding to the greatest similarity distance in the second class;

obtaining a weighted distance between the object in the first class and the second class according to the minimum weighted distance and the average weighted distance; and

obtaining the first unidirectional weighted distance from the first class to the second class according to the weighted distances between all objects in the first class and the second class, and the weight coefficients corresponding to the weighted distances.

According to a second aspect, the invention relates to a device for clustering, comprising:

an acquiring unit configured to obtain a weighted distance between two classes according to a weight coefficient corresponding to an inter-object distance with respect to all classes to be combined, the weight coefficient being determined according to a similarity between two objects corresponding to the inter-object distance;

a determining unit configured to determine whether there are classes that can be combined according to the weighted distance between the two classes and a preset distance threshold; and

a combining unit configured to respectively combine all classes that can be combined, when the classes that can be combined exist, and the acquiring unit performing the step of obtaining the weighted distance between the two classes according to the weight coefficient corresponding to the inter-object distance with respect to all classes to be combined until the number of the classes after combining is the same as the number of the classes before combining, and obtaining a clustering result.

In a particular embodiment,, the device further comprises:

a statistic unit configured to obtain a corresponding relationship between the inter-object distance and a probability whether the two objects are the same object according to sample object statistics;

a determining unit configured to determine a mapping relationship between the inter-object distance and the weight coefficient according to the corresponding relationship, the weight coefficient being determined according to the probability.

In a particular embodiment, the determining unit comprises:

a querying sub-unit configured to query the corresponding relationship, to obtain the probability whether the two objects corresponding to the inter-object distance are the same person;

a determining sub-unit configured to determine that the probability is the weight coefficient corresponding to the inter-object distance.

In a particular embodiment, the weighted distance is a weighted distance between a first class and a second class, and the acquiring unit comprises:

a first acquiring sub-unit configured to acquire a greatest similarity distance between any object within the first class and all objects within the second class, and a first weight coefficient corresponding to the greatest similarity distance;

a second acquiring sub-unit configured to obtain a first unidirectional weighted distance from the first class to the second class according to the greatest similarity distance and the corresponding first weight coefficient, with respect to all objects of the first class;

a third acquiring sub-unit configured to acquire a second unidirectional weighted distance form the second class to the first class; and

a fourth acquiring sub-unit configured to obtain a weighted distance between the first class and the second class according to the first unidirectional weighted distance and the second unidirectional weighted distance.

In a particular embodiment, the second acquiring sub-unit comprises:

a fifth acquiring sub-unit configured to acquire a greatest similarity distance between any object within the first class and all objects of the second class, and a first weight coefficient corresponding to the greatest similarity distance;

a sixth acquiring sub-unit configured to obtain a minimum weighted distance between the object in the first object and all objects of the second class, according to a product of the greatest similarity distance and the corresponding first weight coefficient;

a seventh acquiring sub-unit configured to acquire an average weighted distance of distances between the object in the first class and other objects except the object corresponding to the greatest similarity distance in the second class;

an eighth acquiring sub-unit configured to obtain a weighted distance between the object in the first class and the second class according to the minimum weighted distance and the average weighted distance; and

a ninth acquiring sub-unit configured to obtain the first unidirectional weighted distance from the first class to the second class according to the weighted distances between all objects in the first class and the second class, and the weight coefficients corresponding to the weighted distances.

According to a third aspect, the invention relates to a terminal device, comprising:

a processor; a memory to store instructions executed by the processor;
wherein the processor is configured to:

obtain a weighted distance between two classes according to a weight coefficient corresponding to an inter-object distance with respect to all classes to be combined, the weight coefficient being determined according to a similarity between two objects corresponding to the inter-object distance;

determine whether there are classes that can be combined according to the weighted distance between the two classes and a preset distance threshold; and

when the two classes can be combined, respectively combine all classes that can be combined, and return to perform the step of obtaining the weighted distance between the two classes according to the weight coefficient corresponding to the inter-object distance with respect to all classes to be combined until the number of the classes after combining is the same as the number of the classes before combining, and obtain a clustering result.

In one particular embodiment, the steps of the method for clustering are determined by computer program instructions.

Consequently, according to a fourth aspect, the invention is also directed to a computer program for executing the steps of a method for clustering as described above when this program is executed by a computer or a processor of a terminal device.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects: the method for clustering obtains the weighted distances between the classes according to the weight coefficient corresponding to the inter-object distance, the weight coefficient is determined according to the similarity between the two objects, i.e. the inter-object distance is weighted, and then the method combines the classes whose weighted distances meet a combining condition, and the method is terminated until the number of the classes after combining is the same as the number of the classes before combining, and obtains the clustering result. Since the weighted distance is associated with the similarity between the two objects, different inter-object distances make different contributions, the greater the similarity is, and the bigger the corresponding contribution is. Thus, accuracy of the clustering result is increased.

It is to be understood that both the foregoing general description and the following detailed description are exemplary only and are not restrictive of the present disclosure.

**BRIEF DESCRIPTION OF THE DRAWINGS**

The accompanying drawings, which are hereby incorporated in and constitute a part of this specification, illustrate embodiments consistent with the invention and, together with the description, serve to explain the principles of the invention.

Fig. 1 is a flow chart showing a method for clustering, according to an exemplary embodiment;
Fig. 2 is a flow chart showing a step S110 in Fig. 1, according to an exemplary embodiment;
Fig. 3 is a flow chart showing a step S111 in Fig. 2, according to an exemplary embodiment;
Fig. 4 is a flow chart showing the obtaining of a weight coefficient, according to an exemplary embodiment;
Fig. 5 is a diagram showing a device for clustering, according to an exemplary embodiment;
Fig. 6 is a diagram showing another device for clustering, according to an exemplary embodiment;
Fig. 7 is a block diagram showing a terminal device, according to an exemplary embodiment; and

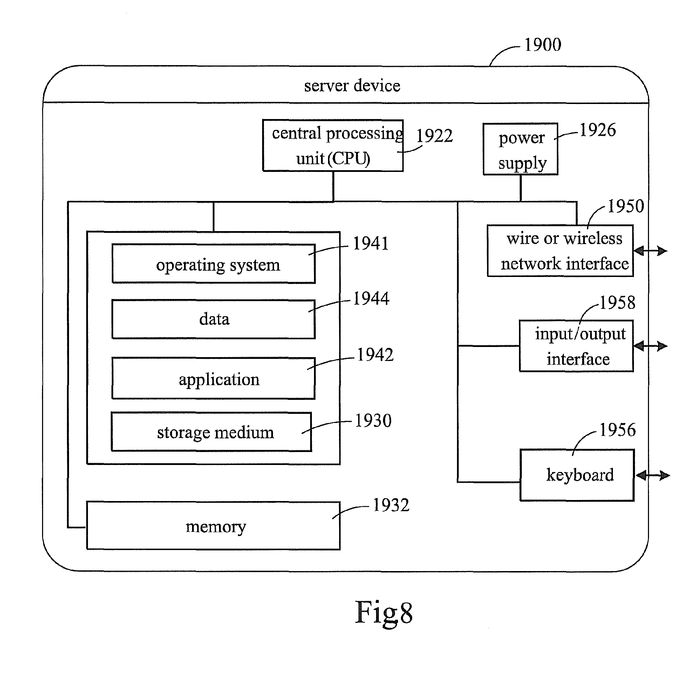

Fig. 8 is a block diagram showing a server, according to an exemplary embodiment.

Specific embodiments in this disclosure have been illustrated by way of example in the above drawings and are hereinafter described in detail. The drawings are not intended to limit the scope of the inventive concepts of this disclosure in any manner. Rather, they are provided to illustrate the inventive concepts of this disclosure to those skilled in the art with reference to particular embodiments.

## DETAILED DESCRIPTION

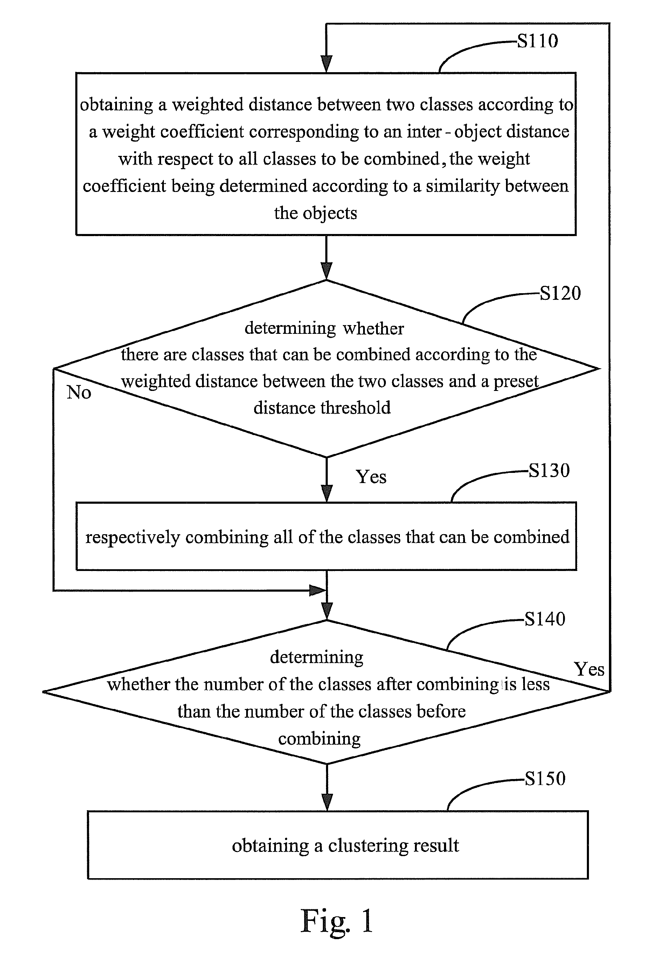

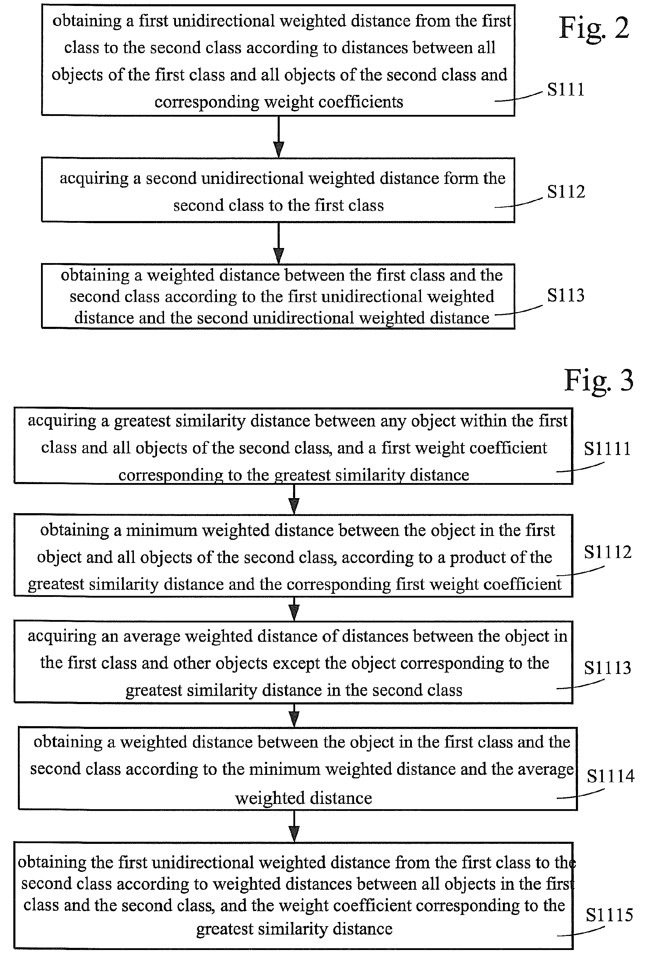

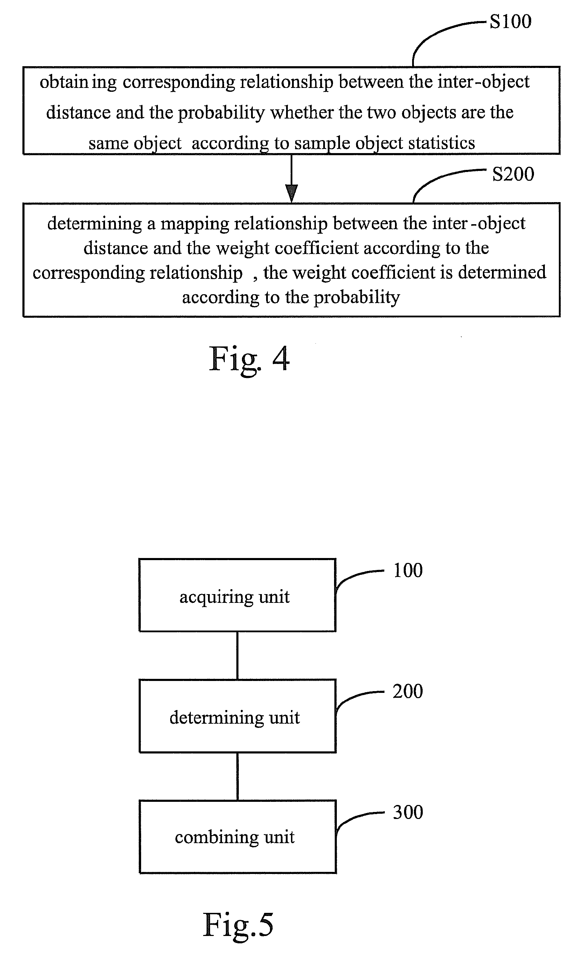

Fig. 1 is a flow chart showing a method for clustering, according to an exemplary embodiment. As shown in Fig. 1, the method for clustering may include the following steps.
In step S110, a weighted distance between two classes is obtained according to a weight coefficient corresponding to an inter-object distance with respect to all classes to be combined, the weight coefficient is determined according to a similarity between the objects.
It is assumed that the objects are human face images, and then the method for clustering provided by the present disclosure can gather the images that belong to the same person together to form one cluster. Features in the face images are converted into a group of vectors, thus the inter-object distance is a inter-vector distance. Moreover, the method for clustering provided by the present disclosure may also be applicable for other data in addition to the pictures.
Before clustering, initialization is performed at first, each object is classified into one class, and distances between the classes are calculated, i.e. distances between the objects included by the classes (such as a cosine similarity, a Euclidean distance or the like) are calculated.
The greater the inter-object similarity is, the larger the corresponding weight coefficient is; in contrast, the smaller the inter-object similarity is, the smaller the corresponding weight coefficient is. For example, the weight coefficient may be determined according to a probability whether two objects corresponding to the inter-object distance are the same object. Or, the weight coefficient is obtained using a weighted kernel function $w = f(d)$, wherein w is the weight coefficient, d is the inter-object distance. For example, $w = \dfrac{1}{d^2}$; or, although it is not enumerated here, the weight coefficient may also be obtained using a preset threshold.
In one embodiment of the present disclosure, as shown in Fig. 2, the step S110 may include comprise the following steps S111~S113.
In step S111, a first unidirectional weighted distance from the first class to the second class is obtained according to distances between all objects of the first class and all objects of the second class and corresponding weight coefficients.
In one embodiment of the present disclosure, as shown in Fig. 3, the step S111 may include the following steps S1111~S1115.
In step S1111, a greatest similarity distance between any object within the first class and all objects within the second class, and a first weight coefficient corresponding to the greatest similarity distance are obtained.
It is assumed that the first class is labeled as A, the second class is labeled as B, the weighted distance between the class A and the class B is calculated, at first, distances $d(A_i, B)$ between any object $A_i$ in the class A and all objects in the class B are calculated, and the greatest similarity distance between the object $A_i$ and all objects in the class B is obtained. In the present embodiment, the cosine similarity is used. Thus, the inter-object similarity corresponding to a maximum cosine similarity $d_{max}(A_i, B)$ is the largest.
In an exemplary embodiment of the present disclosure, the weight coefficient may be obtained according to the probability whether the two objects corresponding to the inter-object distance are the same object, as shown in Fig. 4, and it may include the following steps.
In step S100, a corresponding relationship between the inter-object distance and the probability whether the two objects are the same object is obtained according to sample object statistics.
For example, in face recognition, a range of the cosine similarity $\cos\theta$ of two face images is calculated to be [0, 1] according to high dimensional features, and according to a large amount of face image statistic data, it comes to a conclusion that when the cosine similarity is within a range of [0.45, 1], the probability that the two objects are the same person basically is 98%; when the cosine similarity is within a range of [0.35, 0.45], the probability that the two objects are the same person basically is 70%; when the cosine similarity is within a range of [0.25, 0.35], the probability that the two objects are the same person basically is 40%; when the cosine similarity is within a range of [0.15, 0.25], the probability that the two objects are the same person is basically 10%; and when the cosine similarity is within a range of [0, 0.15], the probability that the two objects are the same person basically is 0.1%.

According to the above statistic results, a relationship between the weight coefficient and the cosine similarity may be described using the following formula (1):

$$
W(d) = \begin{cases} 1, if \cos\theta \ge 0.45 \\ 0.7, if\, 0.35 \le \cos\theta < 0.45 \\ 0.4, if\, 0.25 \le \cos\theta < 0.35 \\ 0.1, if\, 0.15 \le \cos\theta < 0.25 \\ 0.001, if \cos\theta < 0.15 \end{cases} \qquad (1)
$$

The formula (1) is a corresponding relationship between the cosine similarity and the probability whether the two objects are the same person. Although not enumerated here, other types of distances may be defined according to the relationship between the distances and the corresponding probabilities.

In step S200, a mapping relationship between the inter-object distance and the weight coefficient is determined according to the corresponding relationship, the weight coefficient is determined according to the probability.

The inter-object distance is obtained, and then it determines which range in the formula (1) that the inter-object distance is within. Finally, the mapping relationship between the inter-object distance and the weight coefficient is determined according to the formula (1). According to the above manner, an obtained weight coefficient corresponding to $d_{max}(A_i,B)$ is $W(d_{max}(A_i,B))$.

In step S1112, a minimum weighted distance (maximum cosine similarity) between the object in the first class and all objects of the second class is obtained according to a produce of the greatest similarity distance and the corresponding first weight coefficient.

The minimum weighted distance $\varphi_{max}(A_i,B)$ between the object $A_i$ and the class B is obtained according to a formula (2):

$$
\varphi_{max}(A_i,B) = W(d_{max}(A_i,B)) * d_{max}(A_i,B) \qquad (2)
$$

In step S1113, an average weighted distance of distances between the object in the first class and other objects except the object corresponding to the greatest similarity distance in the second class is acquired.

It is assumed that the distance between the object $A_i$ in the class A and an object b in the class B is the largest, the average weighted distance $\varphi_{avg}(A_i,B)$ between the object $A_i$ and the rest of the objects except the object b in the class B is acquired according to a formula (3):

$$
\varphi_{avg}(A_i,B) = \frac{\sum\limits_{j \in B,\; j \ne b} W(d(A_i,B_j)) * d(A_i,B_j)}{\sum\limits_{j \in B,\; j \ne b} W(d(A_i,B_j))} \qquad (3)
$$

In step S1114, a weighted distance between the object in the first class and the second class is obtained according to the minimum weighted distance and the average weighted distance.

From the minimum weighted distance $\varphi_{max}(A_i,B)$ and the average weighted distance $\varphi_{avg}(A_i,B)$ between the object $A_i$ and the class B, the weighted distance $\varphi(A_i,B)$ from the object $A_i$ to the class B is obtained according to a formula (4):

$$
\varphi(A_i,B) = \varphi_{max}(A_i,B) + \varphi_{avg}(A_i,B) \qquad (4)
$$

In step S1115, the first unidirectional weighted distance from the first class to the second class is obtained according to the weighted distances between all objects in the first class and the second class, and the weight coefficient corresponding to the greatest similarity distance.

The first unidirectional weighted distance S (A, B) between the class A and the class B is obtained according to a formula (5):

$$S(A, B) = \frac{\sum\limits_{i \in A} \varphi(A_i, B)}{\sum\limits_{i \in A} W(d_{max}(A_i, B))} \qquad (5)$$

In the formula (5), $W(d_{max}(A_i, B))$ refers to a weight coefficient corresponding to the maximum cosine similarity (the minimum distance) $d_{max}(A_i, B)$ between the object $A_i$ in the class A and all objects in the class B.

In step S112, a second unidirectional weighted distance from the second class to the first classis is acquired.

The second unidirectional weighted distance S (B, A) from the class B to the class A is calculated in a similar way as the calculation of the first unidirectional weighted distance from the class A to the class B and therefore will not be described repeatedly herein

In step S113, a weighted distance between the first class and the second class is obtained according to the first unidirectional weighted distance and the second unidirectional weighted distance.

The weighted distance H (A, B) between the class A and the class B is calculated according to a formula (6):

$$H(A, B) = \frac{S(A, B) + S(B, A)}{2} \qquad (6)$$

In step S120, it is determined whether there are classes that can be combined according to the weighted distance between the two classes and a preset distance threshold. When there are classes that can be combined exist, step S130 is performed; and when there are no classes that can be combined, step S140 is performed.

The preset distance threshold may be set according to data types of different objects, and may be set according to types of the calculated inter-object distance (such as a cosine similarity, a Euclidean distance or the like). For example, the objects are the face images, and the inter-object distance is the cosine similarity, then the distance threshold may be set to be 0.3~0.35.

For the different types of inter-class distances used in the calculation of the weighted distance, the conditions for determining whether two classes can be combined are also different.

When the weighted distances of the classes are obtained according to the cosine similarities between the classes, it is determined whether the weighted distance between the two classes is not smaller than the preset distance threshold, if the weighted distance between the two classes is not smaller than the preset distance threshold, it indicates that the similarity between the two classes is great and the two classes may be combined.

When the weighted distances between the classes are calculated from the Euclidean distance or other distances, it is determined whether the weighted distance between the two classes is not greater than the preset distance threshold, if the weighted distance between the two classes is not greater than the preset distance threshold, it indicates that the similarity between the two classes is great and the two classes may be combined.

The weighted distance provided by the embodiments of the present disclosure is obtained by using the minimum weighted distance and the average weighted distance between the classes, in this way, not only the class that has more objects can be leaned but also the class that has less objects can be considered all sidedly, which greatly accommodate to the characteristics of human face clustering. Thus, clustering using the weighted distance can increase the clustering accuracy.

When there are two classes that can be combined, in step S130, all classes that can be combined are respectively combined.

In step S140, it is determined whether the number of the classes after combining is less than the number of the classes before combining, if yes, it returns to perform step S110; and if no, it proceeds to step S150.

When the number of the classes after combining is smaller than the number of the classes before combining, it returns to perform the step of obtaining the weighted distance between the two classes according to the weight coefficient corresponding to the inter-object distance with respect to all classes to be combined until the number of the classes after combining is the same as the number of the classes before combining, i.e. there is no more classes that can be combined, and a clustering result is obtained.

In step S150, the clustering result is obtained.

The similarity of the objects that are collected into one class is great, and the dissimilarity is small. Taking the face images as the objects, the face images that are collected into one class are the images of the same person.

In the method for clustering provided by the embodiments of the present disclosure the weighted distance between the classes is obtained according to the weight coefficient corresponding to the inter-object distance, the weight coefficient is determined according to the similarity between the two objects, i.e. the inter-object distance is weighted; and then the classes whose weighted distances meet a combining condition are combined, which is terminated until the number of the classes after combining is the same as the number of the classes before combining, and the clustering result is obtained. Since the weighted distance is associated with the similarity between the two objects, if the similarity of the objects is different, their corresponding contribution to the clustering result are different, the greater the similarity is, the bigger the corresponding contribution is. Thus, accuracy of the clustering result is increased.

Fig. 5 is a diagram showing a device for clustering, according to an exemplary embodiment. Referring to Fig. 5, the device includes an acquiring unit 100, a determining unit 200 and a combining unit 300.

The acquiring unit 100 is configured to obtain a weighted distance between two classes according to a weight coefficient corresponding to an inter-object distance with respect to all classes to be combined, the weight coefficient is determined according to a similarity between two objects corresponding to the inter-object distance.

The acquiring unit 100 may include a first acquiring sub-unit, a second acquiring sub-unit, a third acquiring sub-unit and a fourth acquiring sub-unit.

The first acquiring sub-unit is configured to acquire a greatest similarity distance between any object within the first class and all objects within the second class, and a first weight coefficient corresponding to the greatest similarity distance.

The second acquiring sub-unit is configured to obtain a first unidirectional weighted distance from the first class to the second class according to the greatest similarity distance and the corresponding first weight coefficient, with respect to all objects of the first class.

In one embodiment of the present disclosure, the second acquiring sub-unit may include a fifth acquiring sub-unit, a sixth acquiring sub-unit, a seventh acquiring sub-unit, an eighth acquiring sub-unit and a ninth acquiring sub-unit.

The fifth acquiring sub-unit is configured to acquire a greatest similarity distance between any object within the first class and all objects of the second class, and a first weight coefficient corresponding to the greatest similarity distance.

The sixth acquiring sub-unit is configured to obtain a minimum weighted distance between the object in the first object and all objects of the second class, according to a product of the greatest similarity distance and the corresponding first weight coefficient.

The seventh acquiring sub-unit is configured to acquire an average weighted distance of distances between the object in the first class and other objects except the object corresponding to the greatest similarity distance in the second class.

The eighth acquiring sub-unit is configured to obtain a weighted distance between the object in the first class and the second class according to the minimum weighted distance and the average weighted distance.

The ninth acquiring sub-unit is configured to obtain the first unidirectional weighted distance from the first class to the second class according to the weighted distances between all objects in the first class and the second class, and the weight coefficients corresponding to the weighted distances.

The third acquiring sub-unit is configured to acquire a second unidirectional weighted distance from the second class to the first class.

The fourth acquiring sub-unit is configured to obtain a weighted distance between the first class and the second class according to the first unidirectional weighted distance and the second unidirectional weighted distance.

The determining unit 200 is configured to determine whether the two classes can be combined according to the weighted distance between the two classes and a preset distance threshold.

The combining unit 300 is configured to respectively combine all classes that can be combined when the two classes can be combined, and to make the acquiring unit perform the step of obtaining the weighted distance between the two classes according to the weight coefficient corresponding to the inter-object distance with respect to all classes to be combined until the number of the classes after combining is the same as the number of the classes before combining, i.e. there are no classes that can be combined, to obtain a clustering result.

In the device for clustering provided by the embodiments of the present disclosure, the weighted distance between the classes is obtained by the acquiring unit according to the weight coefficient corresponding to the inter-object distance, the weight coefficient is determined according to the similarity between the two objects, i.e. the inter-object distance is weighted; after the determining unit determines there are classes that can be combined according to the weighted distance, the combining unit combines the classes whose weighted distances meet the combining condition until the number of the classes after combining is the same as the number of the classes before combining, to obtain a clustering result. Since the weighted distance is associated with the similarity between the two objects, if the similarity of the objects is different, their corresponding contribution to the clustering result are different, the greater the similarity is, the bigger the corresponding contribution is. Thus, accuracy of the clustering result is increased.

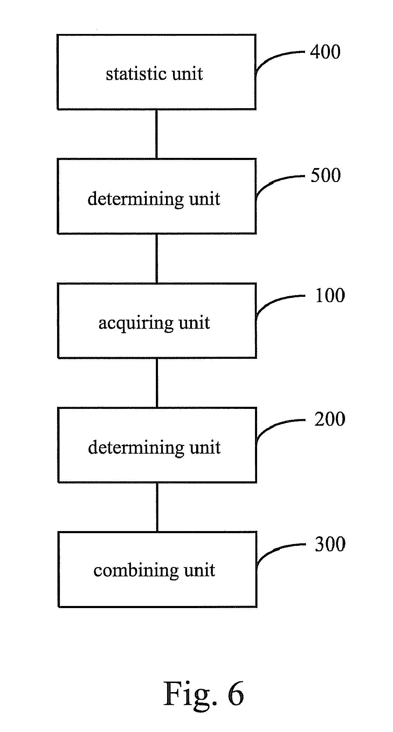

Fig. 6 is a diagram showing another device for clustering, according to an exemplary embodiment. Referring to Fig. 6, the device includes a statistic unit 400, a determining unit 500, an acquiring unit 100, a determining unit 200 and a combining unit 300. Wherein the units whose names and reference numbers are the same as those of the embodiment shown in Fig. 5 have the same function and are not described repeatedly here.

The statistic unit 400 is configured to obtain a corresponding relationship between an inter-object distance and a probability whether two objects are the same object according to sample object statistics.

The determining unit 500 is configured to determine a mapping relationship between the inter-object distance and a weight coefficient according to the corresponding relationship, the weight coefficient is determined according to the probability.

The determining unit may include a querying sub-unit and a determining sub-unit.

The querying sub-unit is configured to query the corresponding relationship, to obtain the probability whether the two objects corresponding to the inter-object distance are the same person.

The determining sub-unit is configured to determine that the probability is the weight coefficient corresponding to the inter-object distance.

The acquiring unit 300 connected with the determining unit 500 is configured to obtain a weighted distance between two classes according to the weight coefficient corresponding to the inter-object distance.

In the device for clustering provided by the embodiments of the present disclosure, firstly the corresponding relationship between the inter-object distance and the probability whether the two objects are the same object is obtained according to a great number of sample objects so as to determine the corresponding weight coefficient, and then the weighted distance between the classes is obtained, the classes that can be combined are determined according to the weighted distance, and the classes that can be combined are combined until the number of the classes after combining and the number of the classes before combining are not changed, thus obtaining a clustering result. Since the weighted distance is associated with the probability whether the two objects are the same object, it can consider the situations that the probability whether the two objects are the same object changes as the distance between the two objects changes, thereby different object-between distances make different contributions, the greater the probability value is, the bigger the corresponding contribution is. Thus, the method for clustering can increase accuracy of the clustering result.

With respect to the devices in the above embodiments, the specific manners for performing operations for individual modules therein have been described in detail in the embodiments regarding to the methods for clustering and will not be described herein.

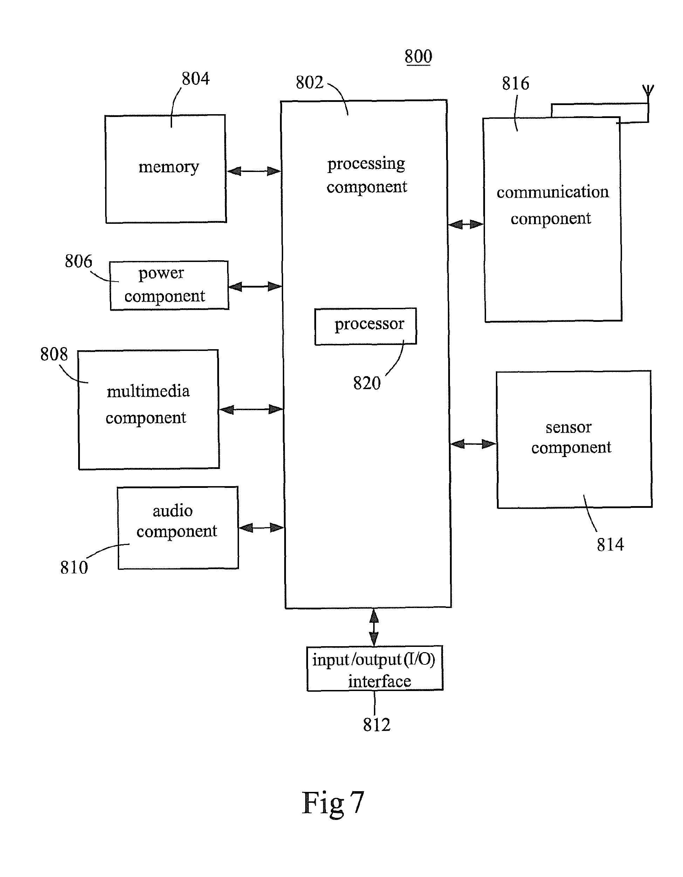

Fig. 7 is a block diagram showing a terminal device 800 for clustering, according to an exemplary embodiment. For example, the terminal device 800 may be a mobile phone, a computer, a digital broadcast terminal, a messaging device, a gaming console, a tablet, a medical device, exercise equipment, a personal digital assistant and the like.

Referring to Fig. 7, the terminal device 800 may comprise one or more of the following components: a processing component 802, a memory 804, a power component 806, a multimedia component 808, an audio component 810, an input/output (I/O) interface 812, a sensor component 814, and a communication component 816.

The processing component 802 usually controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any application or method operated on the terminal device 800, contact data, phonebook data, messages, pictures, videos, etc. The memory 804 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, one or more power sources, and other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive an external multimedia datum while the terminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button, and the like. The button may include, but not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keyboard, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the terminal device 800, for performing the above-described methods. For example, the non-transitory computer-readable storage medium may be a ROM, a random access memory (RAM), a CD-ROM, a magnetic tape, a floppy disc, an optical data storage device, and the like.

When instructions in the non-transitory computer readable storage medium are executed by the processor of the terminal device, the terminal device can execute a method for clustering, the method includes:

obtaining a weighted distance between two classes according to a weight coefficient corresponding to an inter-object distance with respect to all classes to be combined, the weight coefficient being determined according to a similarity between two objects corresponding to the inter-object distance; determining whether there are classes that can be combined according to the weighted distance between the two classes and a preset distance threshold; when the classes that can be combined exist, respectively combining all of the classes that can be combined, and returning to perform the step of obtaining the weighted distance between the two classes according to the weight coefficient corresponding to the inter-object distance with respect to all classes to be combined until the number of the classes after combining is the same as the number of the classes before combining, and obtaining a clustering result.

Alternatively, the method further includes: obtaining a corresponding relationship between the inter-object distance and a probability whether the two objects are the same object according to sample object statistics; and determining a mapping relationship between the inter-object distance and the weight coefficient according to the corresponding relationship, the weight coefficient being determined according to the probability.

Alternatively, the step of determining the mapping relationship between the inter-object distance and the weight coefficient according to the corresponding relationship comprises:

querying the corresponding relationship to obtain the probability whether the two objects corresponding to the inter-object distance are the same object; and determining that the probability is the weight coefficient corresponding to the inter-object distance.

Alternatively, the weighted distance is a weighted distance between a first class and a second class; and the step of obtaining the weighted distance between the two classes according to the weight coefficient corresponding to the inter-object distance with respect to all classes to be combined comprises:

obtaining a first unidirectional weighted distance from the first class to the second class according to distances between all objects of the first class and all objects of the second class and corresponding weight coefficients; acquiring a second unidirectional weighted distance form the second class to the first class; and obtaining a weighted distance between the first class and the second class according to the first unidirectional weighted distance and the second unidirectional weighted distance.

Alternatively, the step of obtaining the first unidirectional weighted distance from the first class to the second class according to the distances between all objects of the first class and all objects of the second class and the corresponding weight coefficients comprises:

acquiring a greatest similarity distance between any object within the first class and all objects of the second class, and a first weight coefficient corresponding to the greatest similarity distance; obtaining a minimum weighted distance between the object in the first object and all objects of the second class, according to a product of the greatest similarity distance and the corresponding first weight coefficient; acquiring an average weighted distance of distances between the object in the first class and other objects except the object corresponding to the greatest similarity distance in the second class; obtaining a weighted distance between the object in the first class and the second class according to the minimum weighted distance and the average weighted distance; and obtaining the first unidirectional weighted distance from the first class to the second class according to the weighted distances between all objects in the first class and the second class, and the weight coefficients corresponding to the weighted distances.

Fig. 13 is a structure diagram of a server in the embodiments of the present disclosure. For example, a server 1900 may very significantly due to different configurations and performances, and may include one or more central processing units (CPU) 1922 (such as one or more processors) and a memory 1932, one or more storage mediums 1930 (such as one or more mass-storage devices) for storing applications 1942 or data 1944. The memory 1932 and the storage medium 1930 may be a transient or a persistent storage. Programs stored in the storage medium 1930 may include one or more modules (not shown in the drawings), and each module may include a series of instruction operations in a terminal device. Further, the CPU 1922 may be provided to communicate with the storage medium 1930, and execute on the server 1900 a series of instruction operations in the storage medium 1930.

The server 1900 may also include one or more power supplies 1926, one or more wire or wireless network interfaces 1950, one or more input/output interfaces 1958, one or more keyboards 1956, and/or one or more operating systems 1941, such as Windows ServerTM, Mac OS XTM, UnixTM, LinuxTM, FreeBSDTM, or the like.

In exemplary embodiments, there is also provided a non-transitory computer readable storage medium including instructions, such as included in the memory 1932 or storage medium 1930, which may be executed by the processor 1922 in the terminal device so as to perform the above-described methods. For example, the non-transitory computer-readable storage medium may be a ROM, a random access memory (RAM), a CD-ROM, a magnetic tape, a floppy disc, an optical data storage device, and the like.

When instructions in the non-transitory computer readable storage medium are executed by the processor of the terminal device, the terminal device can execute a method for clustering, the method includes:
obtaining a weighted distance between two classes according to a weight coefficient corresponding to an inter-object distance with respect to all classes to be combined, the weight coefficient being determined according to a similarity between two objects corresponding to the inter-object distance;
determining whether there are classes that can be combined according to the weighted distance between the two classes and a preset distance threshold;
when the classes that can be combined exist, respectively combining all of the classes that can be combined, and returning to perform the step of obtaining the weighted distance between the two classes according to the weight coefficient corresponding to the inter-object distance with respect to all classes to be combined until the number of the classes after combining is the same as the number of the classes before combining, and obtaining a clustering result.

Alternatively, the method further includes: obtaining a corresponding relationship between the inter-object distance and a probability whether the two objects are the same object according to sample object statistics; and determining a mapping relationship between the inter-object distance and the weight coefficient according to the corresponding relationship, the weight coefficient being determined according to the probability.

Alternatively, the step of determining the mapping relationship between the inter-object distance and the weight coefficient according to the corresponding relationship comprises:

querying the corresponding relationship to obtain the probability whether the two objects corresponding to the inter-object distance are the same object; and determining that the probability is the weight coefficient corresponding to the inter-object distance.

Alternatively, the weighted distance is a weighted distance between a first class and a second class; and the step of obtaining the weighted distance between the two classes according to the weight coefficient corresponding to the inter-object distance with respect to all classes to be combined comprises:
obtaining a first unidirectional weighted distance from the first class to the second class according to distances between all objects of the first class and all objects of the second class and corresponding weight coefficients; acquiring a second unidirectional weighted distance form the second class to the first class; and obtaining a weighted distance between the first class and the second class according to the first unidirectional weighted distance and the second unidirectional weighted distance.
Alternatively, the step of obtaining the first unidirectional weighted distance from the first class to the second class according to the distances between all objects of the first class and all objects of the second class and the corresponding weight coefficients comprises:
acquiring a greatest similarity distance between any object within the first class and all objects of the second class, and a first weight coefficient corresponding to the greatest similarity distance; obtaining a minimum weighted distance between the object in the first object and all objects of the second class, according to a product of the greatest similarity distance and the corresponding first weight coefficient; acquiring an average weighted distance of distances between the object in the first class and other objects except the object corresponding to the greatest similarity distance in the second class; obtaining a weighted distance between the object in the first class and the second class according to the minimum weighted distance and the average weighted distance; and obtaining the first unidirectional weighted distance from the first class to the second class according to the weighted distances between all objects in the first class and the second class, and the weight coefficients corresponding to the weighted distances.
It should be understood that the present invention is not limited to precise structure that is described above and shown in the drawings, and may be modified and changed without departing from the scope. The scope of the present invention is only limited by the appended claims.
It is explained that, in the context, relationship terms such as "first" and "second" are only used to distinguish one entity or operation from another entity or operation, it is not necessary to imply or require that these entities or operations have the actual relationship or sequence. Moreover, terms "including", "comprising" or any other variant mean to cover non-exclusive including, so that a process, a method, an article or a device including a series of elements not only includes those elements but also includes other elements that are not clearly listed, or further includes elements naturally possessed by the process, the method, the article, or the device. Without more limitations, elements defined by the phase "including a ..." don't exclude the fact that the process, the method, the article or the device including the elements further includes other same elements.
The above mentioned are only detailed embodiments of the present disclosure, and those skilled in the art can understand or carry out the present disclosure. Various modifications to these embodiments are obvious for those skilled in the art. General concepts defined in the context may be carried out in other embodiments without departing from the spirit or scope of the present disclosure. Thus, the present disclosure will not be limited to these embodiments shown herein, and the present disclosure is intended to be conformed to the broadest scope consistent with the principles and novel features disclosed herein.

**Claims**

1. A method for clustering, **characterized in that**, the method comprises:

   Obtaining (S110) a weighted distance between two classes according to a weight coefficient corresponding to an inter-object distance with respect to all classes to be combined, the weight coefficient being determined according to a similarity between the objects;
   determining (S120) whether there are classes that can be combined according to the weighted distance between the two classes and a preset distance threshold; and
   when the classes that can be combined exist, respectively combining (S130) all of the classes that can be combined, and returning to perform the step of obtaining (S110) the weighted distance between the two classes according to the weight coefficient corresponding to the inter-object distance with respect to all classes to be combined until the number of the classes after combining is the same as the number of the classes before combining, and obtaining (S150) a clustering result.

**2.** The method according to claim 1, **characterized in that**, the method further comprises:

obtaining (S100) a corresponding relationship between the inter-object distance and a probability whether the two objects are the same object according to sample object statistics; and
determining (S200) a mapping relationship between the inter-object distance and the weight coefficient according to the corresponding relationship, the weight coefficient being determined according to the probability.

**3.** The method according to claim 2, **characterized in that**, the step of determining (S200) the mapping relationship between the inter-object distance and the weight coefficient according to the corresponding relationship comprises:

querying the corresponding relationship to obtain the probability whether the two objects corresponding to the inter-object distance are the same object; and
determining that the probability is the weight coefficient corresponding to the inter-object distance.

**4.** The method according to claim 1 or 2, **characterized in that**, the weighted distance is a weighted distance between a first class and a second class; and the step of obtaining (S110) the weighted distance between the two classes according to the weight coefficient corresponding to the inter-object distance with respect to all classes to be combined comprises:

obtaining (S111) a first unidirectional weighted distance from the first class to the second class according to distances between all objects of the first class and all objects of the second class and corresponding weight coefficients;
acquiring (S112) a second unidirectional weighted distance form the second class to the first class; and
obtaining (S113) a weighted distance between the first class and the second class according to the first unidirectional weighted distance and the second unidirectional weighted distance.

**5.** The method according to claim 4, **characterized in that**, the step of obtaining (S111) the first unidirectional weighted distance from the first class to the second class according to the distances between all objects of the first class and all objects of the second class and the corresponding weight coefficients comprises:

acquiring (S1111) a greatest similarity distance between any object within the first class and all objects of the second class, and a first weight coefficient corresponding to the greatest similarity distance;
obtaining (S1112) a minimum weighted distance between the object in the first object and all objects of the second class, according to a product of the greatest similarity distance and the corresponding first weight coefficient;
acquiring (S1113) an average weighted distance of distances between the object in the first class and other objects except the object corresponding to the greatest similarity distance in the second class;
obtaining (S1114) a weighted distance between the object in the first class and the second class according to the minimum weighted distance and the average weighted distance; and
obtaining (S1115) the first unidirectional weighted distance from the first class to the second class according to the weighted distances between all objects in the first class and the second class, and the weight coefficients corresponding to the weighted distances.

**6.** A device for clustering, **characterized in that**, the device comprises:

an acquiring unit (100) configured to obtain a weighted distance between two classes according to a weight coefficient corresponding to an inter-object distance with respect to all classes to be combined, the weight coefficient being determined according to a similarity between the objects;
a determining unit (200) configured to determine whether there are classes that can be combined according to the weighted distance between the two classes and a preset distance threshold; and
a combining unit (300) configured to respectively combine all classes that can be combined when the classes that can be combined exist, and to control the acquiring unit to perform the step of obtaining the weighted distance between the two classes according to the weight coefficient corresponding to the inter-object distance with respect to all classes to be combined until the number of the classes after combining is the same as the number of the classes before combining, and to obtain a clustering result.

**7.** The device according to claim 6, **characterized in that**, the device further comprises:

a statistic unit (400) configured to obtain a corresponding relationship between the inter-object distance and a probability whether the two objects are the same object according to sample object statistics;

a determining unit (500) configured to determine a mapping relationship between the inter-object distance and the weight coefficient according to the corresponding relationship, the weight coefficient being determined according to the probability.

8. The device according to claim 7, **characterized in that**, the determining unit (500) comprises:

a querying sub-unit configured to query the corresponding relationship, to obtain the probability whether the two objects corresponding to the inter-object distance are the same object; and

a determining sub-unit configured to determine that the probability is the weight coefficient corresponding to the inter-object distance.

9. The device according to claim 6 or 7, **characterized in that**, the weighted distance is a weighted distance between a first class and a second class, and the acquiring unit (100) comprises:

a first acquiring sub-unit configured to acquire a greatest similarity distance between any object within the first class and all objects within the second class, and a first weight coefficient corresponding to the greatest similarity distance;

a second acquiring sub-unit configured to obtain a first unidirectional weighted distance from the first class to the second class according to the greatest similarity distance and the corresponding first weight coefficient;

a third acquiring sub-unit configured to acquire a second unidirectional weighted distance form the second class to the first class; and

a fourth acquiring sub-unit configured to obtain a weighted distance between the first class and the second class according to the first unidirectional weighted distance and the second unidirectional weighted distance.

10. The device according to claim 9, **characterized in that**, the second acquiring sub-unit comprises:

a fifth acquiring sub-unit configured to acquire a greatest similarity distance between any object within the first class and all objects of the second class, and a first weight coefficient corresponding to the greatest similarity distance;

a sixth acquiring sub-unit configured to obtain a minimum weighted distance between the object in the first object and all objects of the second class, according to a product of the greatest similarity distance and the corresponding first weight coefficient;

a seventh acquiring sub-unit configured to acquire an average weighted distance of distances between the object in the first class and other objects except the object corresponding to the greatest similarity distance in the second class;

an eighth acquiring sub-unit configured to obtain a weighted distance between the object in the first class and the second class according to the minimum weighted distance and the average weighted distance; and

a ninth acquiring sub-unit configured to obtain the first unidirectional weighted distance from the first class to the second class according to the weighted distances between all objects in the first class and the second class, and the weight coefficients corresponding to the weighted distances.

11. A terminal device (800), **characterized in that**, the device comprises:

a processor (820);

a memory (804) to store instructions executed by the processor (820);

wherein the processor (820) is configured to:

obtain a weighted distance between two classes according to a weight coefficient corresponding to an inter-object distance with respect to all classes to be combined, the weight coefficient being determined according to a similarity between the objects;

determine whether there are classes that can be combined according to the weighted distance between the two classes and a preset distance threshold; and

when the two classes can be combined, respectively combine all classes that can be combined, and return to perform the step of obtaining the weighted distance between the two classes according to the weight coefficient corresponding to the inter-object distance with respect to all classes to be combined until the number of the classes after combining is the same as the number of the classes before combining, and obtain a clustering result.

12. A computer program including instructions for executing the steps of a method for clustering according to any one of claims 1 to 5 when said program is executed by a computer.

13. A recording medium readable by a computer and having recorded thereon a computer program including instructions for executing the steps of a method for clustering according to any one of claims 1 to 5.

S110

obtaining a weighted distance between two classes according to a weight coefficient corresponding to an inter - object distance with respect to all classes to be combined, the weight coefficient being determined according to a similarity between the objects

S120

determining whether there are classes that can be combined according to the weighted distance between the two classes and a preset distance threshold

No

Yes

S130

respectively combining all of the classes that can be combined

S140

determining whether the number of the classes after combining is less than the number of the classes before combining

Yes

S150

obtaining a clustering result

Fig. 1

Fig. 2

obtaining a first unidirectional weighted distance from the first class to the second class according to distances between all objects of the first class and all objects of the second class and corresponding weight coefficients —— S111

acquiring a second unidirectional weighted distance form the second class to the first class —— S112

obtaining a weighted distance between the first class and the second class according to the first unidirectional weighted distance and the second unidirectional weighted distance —— S113

Fig. 3

acquiring a greatest similarity distance between any object within the first class and all objects of the second class, and a first weight coefficient corresponding to the greatest similarity distance —— S1111

obtaining a minimum weighted distance between the object in the first object and all objects of the second class, according to a product of the greatest similarity distance and the corresponding first weight coefficient —— S1112

acquiring an average weighted distance of distances between the object in the first class and other objects except the object corresponding to the greatest similarity distance in the second class —— S1113

obtaining a weighted distance between the object in the first class and the second class according to the minimum weighted distance and the average weighted distance —— S1114

obtaining the first unidirectional weighted distance from the first class to the second class according to weighted distances between all objects in the first class and the second class, and the weight coefficient corresponding to the greatest similarity distance —— S1115

S100

obtaining corresponding relationship between the inter-object distance and the probability whether the two objects are the same object according to sample object statistics

S200

determining a mapping relationship between the inter-object distance and the weight coefficient according to the corresponding relationship , the weight coefficient is determined according to the probability

# Fig. 4

acquiring unit — 100

determining unit — 200

combining unit — 300

# Fig.5

statistic unit — 400

determining unit — 500

acquiring unit — 100

determining unit — 200

combining unit — 300

Fig. 6

800

804

memory

802

processing
component

816

communication
component

806

power
component

processor

820

808

multimedia
component

810

audio
component

sensor
component

814

input/output (I/O)
interface

812

Fig 7

_1900

server device

central processing unit (CPU) _1922

power supply _1926

_1950

wire or wireless network interface

operating system _1941

data _1944

application _1942

storage medium _1930

input/output interface _1958

keyboard _1956

memory _1932

Fig8

**EP 2 919 136 A1**

## EUROPEAN SEARCH REPORT

Application Number

EP 15 15 4051

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/089902 A1 (NOKIA CORP [FI]; UKIL SOUMIK [IN]; S V BASAVARAJA [IN]; MISHRA PRAVAV) 5 July 2012 (2012-07-05)<br>* abstract; figure 1 *<br>* page 5, line 1 - page 7, line 30 *<br>* page 11, line 17 - page 16, line 29; figure 5 *<br>----- | 1-13 | INV.<br>G06F17/30 |
| | | | TECHNICAL FIELDS SEARCHED (IPC)<br><br>G06F |

The present search report has been drawn up for all claims

| Place of search | Date of completion of the search | Examiner |
|---|---|---|
| Munich | 3 July 2015 | Deane, Inigo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

**ANNEX TO THE EUROPEAN SEARCH REPORT
ON EUROPEAN PATENT APPLICATION NO.** EP 15 15 4051

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2015

| Patent document cited in search report | Publication date | Patent family member(s) | | Publication date |
|---|---|---|---|---|
| WO 2012089902 A1 | 05-07-2012 | EP | 2659400 A1 | 06-11-2013 |
| | | US | 2012321193 A1 | 20-12-2012 |
| | | WO | 2012089902 A1 | 05-07-2012 |

EPO FORM P0459